# DEMANDE DE BREVET EUROPEEN

(11) **EP 1 710 392 A2**
(43) Date de publication de la demande: **11.10.2006**
(21) Numéro de dépôt: 06370009.0
(22) Date de dépôt: 14.03.2006
(51) Int. Cl.: E06C 5/04, B61D 15/08

(54) **Cabine destinée à être disposée sur une échelle équipant une structure mobile**

(30) Priorité: 15.03.2005 FR 0502542; 26.07.2005 FR 0507974
(71) Demandeur: Fournier, André, 59840 Lompret (FR)
(72) Inventeur: Fournier, André, 59840 Lompret (FR)
(74) Mandataire: Hennion, Jean-Claude

(57) **Abrégé**

L'invention a trait à une cabine destinée à être disposée sur une échelle équipant une structure mobile notamment lorry.

Elle est caractérisée en ce qu'elle comprend :
- des moyens de fixation (19) haut et bas sur deux échelons de l'échelle (1) ;
- deux parois latérales (20) reliées à une paroi dorsale (21) et deux montants rectangulaires inférieur (22) et supérieur (23) ;
- une trappe pivotante (24) ;
- des moyens d'articulation entre les parois, la trappe et les montants permettant de replier la cabine à plat contre l'échelle ;
- des moyens de solidarisation entre les parois, la trappe et les montants permettant de bloquer les différents éléments entre eux avec la cabine en position ouverte.

## Description

La présente invention concerne une échelle destinée à équiper une structure mobile telle que notamment un lorry, un lorry équipé d'au moins une échelle telle que précitée ainsi qu'une cabine apte à être disposée sur ladite échelle.

La présente invention concerne d'une manière générale le domaine des échelles destinées à équiper une structure mobile et trouvera principalement son intérêt dans la réalisation d'un ensemble échelle pour lorry.

Bien entendu, d'autres applications sont également envisageables et notamment une échelle pourra également équiper des structures mobiles munies de roues pour des déplacements sur la voierie.

On connaît déjà des lorries, c'est à dires des wagonnets plats pour le transport du matériel d'entretien des voies ferrées, les échelles permettant de venir réparer les caténaires.

Les échelles sont généralement de deux types, à savoir, un premier type constitué de doubles échelles dont les bases élargies sont réunies sur les côtés du lorry et dont les extrémités supérieures sont reliées entre elles de manière à former en vue de côté un A.

On connaît également des lorries équipés d'échelles doubles, ces deux échelles n'étant cette fois pas reliées au niveau de leur sommet mais reliées entre elles par des traverses disposées parallèlement au plan du lorry et dans la partie supérieure des échelles permettant d'obtenir un écartement au sommet des échelles.

Dans un cas comme dans l'autre, ces échelles permettent de manière satisfaisante l'entretien des caténaires.

Toutefois, compte tenu de la structure de ces échelles, il est impossible pour les agents d'entretien de pratiquer des travaux au dessus des caténaires puisque ces échelles sont nécessairement placées à l'aplomb de la caténaire.

Entre autres, il n'est pas possible pour les agents d'entretien de venir travailler sur les suspentes de caténaires avec ces systèmes à échelles doubles et par conséquent, d'autres techniques pour l'entretien et la réparation des suspentes de caténaires ont du être mises au point.

On connaît à ce sujet une technique dans laquelle les agents d'entretien sont reliés par des harnais et des lignes de vie au dessus des caténaires, ce qui ne permet pas de travailler dans des conditions suffisantes de sécurité et nécessite des agents d'entretien spécialement formés pour ce type d'opérations.

Il faut également noter que les échelles utilisées pour la réparation des caténaires qui sont doubles sont particulièrement difficiles à manipuler tant au niveau de l'installation en position verticale de l'échelle qu'au niveau du coulissement de la partie supérieure.

La présente invention a pour but de pallier aux inconvénients précités et de proposer une échelle destinée à équiper une structure mobile telle que notamment lorry permettant de travailler au dessus des caténaires.

Un autre but de la présente invention est de proposer une échelle destinée à équiper une structure mobile telle que notamment lorry présentant une structure allégée vis-à-vis de l'état de la technique.

Un autre but de la présente invention est de proposer une échelle destinée à équiper une structure mobile telle que notamment lorry comportant de multiples possibilités de réglage tant au niveau de l'inclinaison de l'échelle qu'au niveau de la longueur de déploiement.

Un autre but de la présente invention est de proposer une échelle présentant des conditions de sécurité tant individuelles que collectives importantes pour l'agent d'entretien.

Un autre but de la présente invention est de proposer une échelle dans lequel la manipulation du plan supérieur de l'échelle ainsi que son blocage peuvent être réalisés facilement par un seul agent d'entretien.

L'invention vise également une cabine notamment destinée à être disposée sur une échelle telle que précitée et pouvant être entièrement repliée à plat le long de l'échelle lorsque cette dernière n'est pas utilisée.

Un autre but de la présente invention est de proposer une cabine présentant une ouverture importante de manière à faciliter l'accès depuis l'échelle.

L'invention a ainsi pour objet une échelle destinée à équiper une structure mobile telle que notamment lorry.

Selon l'invention, ladite échelle comprend:
- un plan inférieur à base élargie et un plan supérieur coulissant;
- des moyens d'assujettissement entre la structure mobile et la base élargie ;
- au moins un contre-appui réglable entre la structure mobile et le plan inférieur de l'échelle.

L'invention vise aussi un lorry équipé d'au moins une échelle telle que précitée.

L'invention vise également une cabine destinée à être disposée sur une échelle notamment telle que précitée, ladite cabine comportant :
- des moyens de fixation haut et bas sur deux échelons de l'échelle;
- deux parois latérales reliées à une paroi dorsale et deux montants rectangulaires inférieur et supérieur;
- une trappe pivotante ;
- des moyens d'articulation entre les parois, la trappe et les montants permettant de replier la cabine à plat contre l'échelle.

D'autres caractéristiques et avantages de l'invention apparaîtront plus clairement à la lecture de la description ci-après faite d'un exemple préféré de réalisation, dans lequel la description n'est donnée qu'à titre d'exemple non limitatif et en référence aux dessins annexés parmi lesquels :
- la figure 1 représente une vue schématique en perspective d'un exemple de réalisation d'un lorry équipé d'une échelle conforme à l'invention;
- la figure 2 représente une vue de côté de l'exemple de la figure 1 ;
- la figure 3 représente une vue de face de l'exemple de réalisation illustré à la figure 1 ;
- la figure 4 représente un détail de réalisation noté 1 de la figure 2.

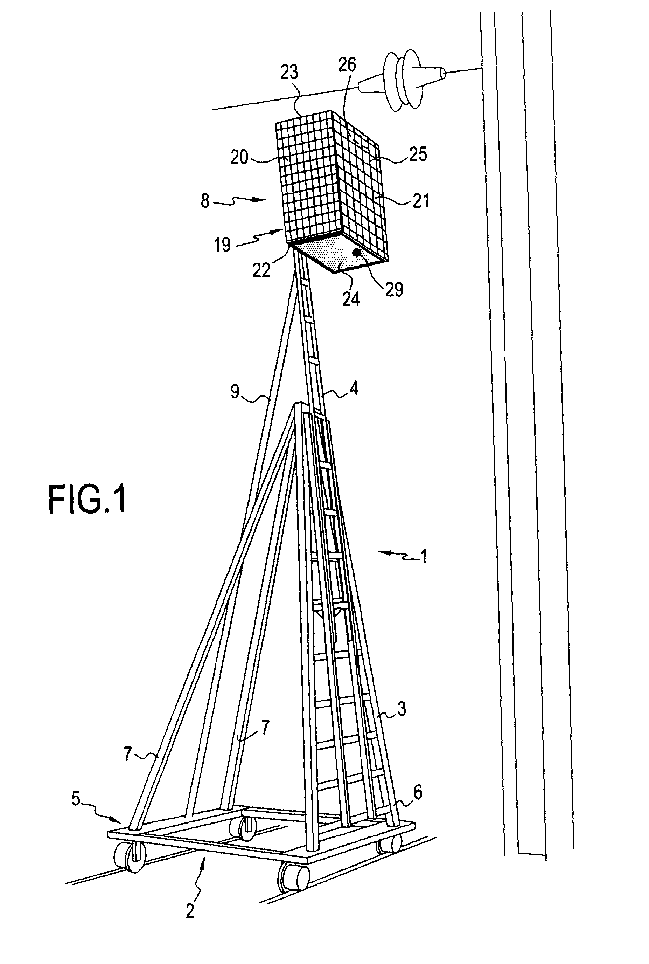

En se reportant principalement à la figure 1, on voit une échelle 1 disposée sur une structure mobile 2, cette échelle 1 comprend un plan inférieur 3 à base élargie et un plan supérieur 4 coulissant.

Ladite échelle 1 comporte également des moyens d'assujettissement 5 entre la structure 2 et ladite base élargie 6.

L'échelle 1 comporte en outre au moins un contre appui 7 réglable entre la structure 2 et le plan inférieur 3 de l'échelle 1.

On voit dans l'exemple de réalisation de la figure 1 que l'échelle 1 est munie de deux contre appuis 7 disposés sur le côté opposé de la structure 2 de celui de la base élargie 6.

L'utilisation de deux contre appuis 7 permet d'obtenir une meilleure stabilité de l'échelle 1.

Toutefois, on pourra également imaginer d'autres réalisations et notamment l'utilisation d'un seul contre appui 7 servant de contreventement au plan inférieur 3.

Dans la figure 1, on voit que l'échelle 1 est en partie déployée, c'est-à-dire que la partie supérieure 4 de l'échelle est relevée de manière à pouvoir effectuer des travaux en hauteur et notamment sur une caténaire telle que partiellement représentée à la figure 1.

Compte tenu du poids de la cabine 8 et surtout de l'agent d'entretien et de la hauteur de déploiement du plan supérieur 4, on prévoit un raidisseur 9 entre le plan supérieur 4 de l'échelle et la structure mobile 2.

Ce raidisseur 9 permet d'éviter tout fléchissement de la partie supérieure de l'échelle 1.

Le raidisseur 9 sera fixé au moment où l'échelle 1 sera installée.

A cette fin, on prévoit que le raidisseur 9 soit réglable en longueur.

Selon un exemple de réalisation avantageux, ledit raidisseur 9 sera constitué d'un tube télescopique comportant au moins deux parties coulissantes, les deux parties pouvant être fixées l'une par rapport à l'autre dans au moins deux positions par un assemblage de type goupille traversant des perforations prévues dans lesdites parties.

Bien entendu, d'autres modes de fixation des parties entre elles ou de réalisation d'un raidisseur réglable à la portée de l'homme de l'art pourront également être utilisés.

On prévoira également compte tenu des applications spécifiques de l'échelle 1 que le raidisseur 9 soit réalisé dans un matériau isolant électriquement.

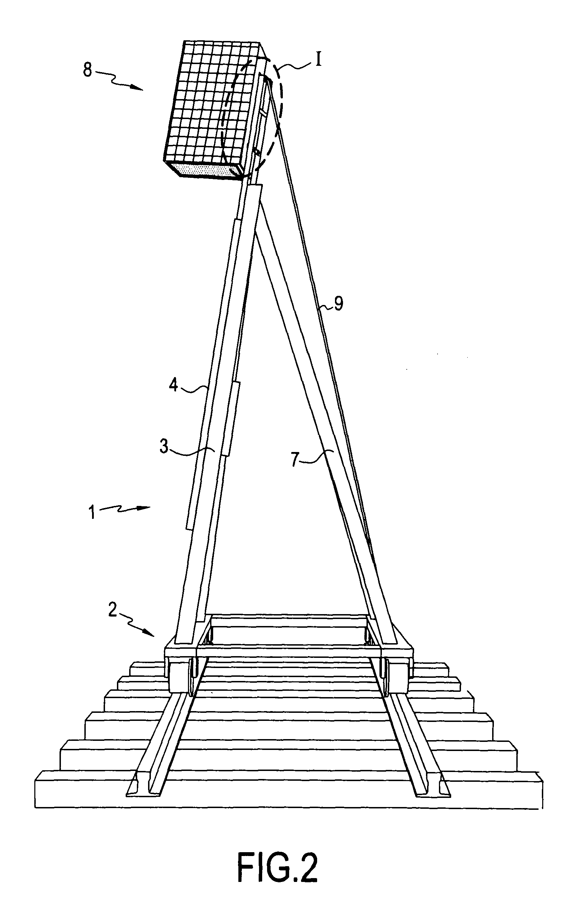

En se reportant cette fois principalement à la figure 2, on voit que l'échelle 1 comporte en outre des moyens de blocage 10 du plan supérieur coulissant 4 au niveau des échelons 11 du plan inférieur 3.

Ces moyens de blocage 10 sont verrouillés sur les échelons 11 par pesanteur et déverrouillés en réalisant une opération manuelle de relèvement.

De préférence, cette opération manuelle de relèvement sera réalisée lors du déplacement du plan supérieur 4 par rapport au plan inférieur 3 de l'échelle.

A cet effet, on prévoit des moyens de déplacement 12, ces moyens étant constitués d'un point de fixation supérieur 13 d'un cordage 14, ledit cordage 14 passant à travers au moins deux poulies de renvoi 15 permettant une élévation du plan supérieur 4 depuis le sol.

De manière à faciliter le déplacement du plan 4 vis-à-vis du plan 3, on prévoit des moyens de glissement du plan supérieur 3 de l'échelle 1 sur le plan inférieur 3.

Ces moyens de glissement non représentés dans les dessins annexés, seront constitués de bandes plastiques présentant une faible adhérence et disposées sur au moins un des plans 3,4 et au niveau de leur surface de contact permettant de limiter considérablement le frottement entre ces deux éléments.

Selon une caractéristique avantageuse de l'invention, on pourra également prévoir tels que représentés à la figure 2, des moyens de sécurisation 16 individuels aptes à coopérer avec un harnais de sécurité et comprenant un cordage 17 et un dispositif anti-chute 18.

Ces dispositifs sont couramment utilisés pour la sécurisation individuelle dans les travaux publics et notamment il pourra s'agir de moyens tels que ceux utilisés dans les sécurisations individuelles utilisant des lignes de vie.

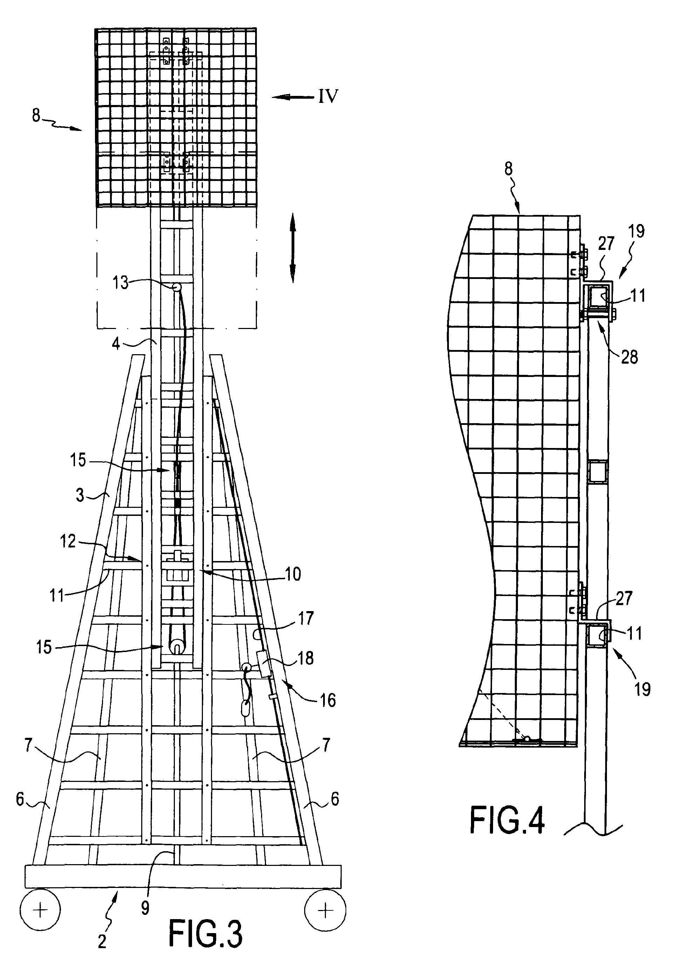

En se reportant principalement cette fois à la figure 3, on voit une cabine 8 destinée à être disposée sur l'échelle 1.

Cette cabine 8 est particulièrement prévue pour une échelle 1 telle que décrite plus haut.

Toutefois, ladite cabine 8 pourra également être utilisée avec les échelles classiquement utilisées pour équiper des lorries.

Cette cabine 8 comporte, tel que représenté à la figure 4, des moyens de fixation 19 haut et bas sur deux échelons 11 de l'échelle 1 ; la cabine 8 comporte également deux parois latérales 20 reliées à une paroi dorsale 21 et à deux montants rectangulaires inférieur 22 et supérieur 23.

Cette cabine 8 comporte également une trappe pivotante 24 et des moyens d'articulation entre les parois 20,21, la trappe 24 et les montants 23 permettant de replier la cabine à plat contre l'échelle.

Elle comporte entre outre des moyens de solidarisation en position ouverte de la cabine. Il s'agira de moyens classiquement connus pour l'homme du métier.

Les moyens d'articulation précités ne sont pas détaillés dans les dessins annexés. Il pourra s'agir notamment de moyens d'articulation comportant entre les parois latérales 20 et la paroi dorsale des charnières permettant un pivotement des parois latérales 20 contre la face extérieure 25 de la paroi dorsale 21 et, entre les montants 23 et la paroi dorsale 21 des charnières permettant un pivotement des montants 23 sur la face intérieure 26 de la paroi dorsale.

En se reportant à la figure 3, on voit que les moyens de fixation 19 comportent des étriers inférieurs et supérieurs 27 aptes à venir enserrer les échelons 11.

Selon une caractéristique avantageuse, les étriers supérieurs 27 comportent des moyens de verrouillage 28 empêchant un soulèvement de la nacelle.

On voit également à la figure 3 que les parois dorsales 21 et latérales 23 sont grillagées permettant de réduire la prise au vent.

Le passage de l'échelle 1 à l'intérieur de la nacelle 8 se fait en soulevant la trappe pivotante 24.

Une fois que l'agent d'entretien est passé à travers la trappe pivotante 24, le poids de cette dernière la rabat contre le montant inférieur de la cabine, la trappe constituant alors le fond de cette cabine 8.

Il est à noter également que selon une caractéristique avantageuse de l'invention, la trappe 24 pourra comporter une échancrure 29 autorisant le passage d'une corde de sécurité.

Bien entendu, d'autres modes de réalisation à la portée de l'homme de l'art auraient pu être envisagés sans pour autant sortir du cadre de l'invention défini par les revendications ci-après.

## Revendications

1. Cabine destinée à être disposée sur une échelle équipant une structure mobile notamment lorry, **CARACTERISEE en ce qu'**elle comprend :
- des moyens de fixation (19) haut et bas sur deux échelons (11) de l'échelle (1) ;
- deux parois latérales (20) reliées à une paroi dorsale (21) et deux montants rectangulaires inférieur (22) et supérieur (23);
- une trappe pivotante (24) ;
- des moyens d'articulation entre les parois, la trappe et les montants permettant de replier la cabine à plat contre l'échelle ;
- des moyens de solidarisation entre les parois, la trappe et les montants permettant de bloquer les différents éléments entre eux avec la cabine en position ouverte.

2. Cabine selon la revendication 1, dans laquelle la trappe (24) comporte une échancrure (29) autorisant le passage d'une corde de sécurité.

3. Cabine selon la revendication 1 ou 2, dans laquelle les moyens d'articulation comportent entre les parois latérales (20) et la paroi dorsale (21) des charnières permettant un pivotement des parois latérales (20) contre la face extérieure (25) de la paroi dorsale (21) et, entre les montants (23) et la paroi dorsale (21), des charnières permettant un pivotement des montants (22, 23) sur la face intérieure (26) de la paroi dorsale (21).

4. Cabine selon l'une quelconque des revendications 1 à 3, dans laquelle les moyens de fixation (19) comportent des étriers (27) inférieurs et supérieurs aptes à venir enserrer les échelons (11), les étriers supérieurs (27) comportant des moyens de verrouillage (28) empêchant un soulèvement de la cabine.

5. Lorry équipé d'au moins une échelle portant une cabine selon l'une quelconque des revendications 1 à 4.
